# EUROPEAN PATENT SPECIFICATION

(11) **EP 1 966 086 B1**
(45) Date of publication and mention of the grant of the patent: **06.05.2009**
(21) Application number: 06830302.3
(22) Date of filing: 04.12.2006
(51) Int. Cl.: C01D 3/14, C01B 7/14

(54) **METHOD OF PURIFYING AN AQUEOUS SOLUTION**
VERFAHREN ZUR REINIGUNG EINER WÄSSRIGEN LÖSUNG
MÉTHODE DE PURIFICATION D'UNE SOLUTION AQUEUSE

(30) Priority: 07.12.2005 FR 0512398
(43) Date of publication of application: 10.09.2008
(73) Proprietor: Solvay SA, 1050 Brussels (BE)
(72) Inventor: PASTACALDI, Alessandra, I-57013 Rosignano Solvay - Livorno (IT)
(74) Representative: Gilliard, Pierre
(86) International application number: PCT/EP2006/069236
(87) International publication number: WO 2007/065863

(56) References cited:
- EP-A1- 0 399 588
- EP-A1- 0 659 686
- FR-A1- 2 679 221

## Description

The subject of the invention is the purification of aqueous solutions, especially aqueous sodium chloride solutions.

It relates more particularly to a method of purifying aqueous solutions comprising iodide, calcium and magnesium ions.

The aqueous sodium chloride solutions obtained from seawater or by dissolving rock salt in water comprise various impurities, among which are especially calcium, magnesium, iron, and also ammoniacal compounds (ammonium hydroxide, ammonium chloride), iodine compounds (metal iodides) and bromine compounds (metal bromides). These impurities are often harmful, for example when the sodium chloride solutions are treated in electrolytic cells for producing chlorine and sodium hydroxide. In particular, the presence of iodide ions in aqueous sodium chloride solutions has been found to be a cause of yield loss for electrolytic cells comprising cation exchange membranes used for the production of chlorine and of aqueous sodium hydroxide solutions. More generally, excessive iodine, calcium and magnesium contents in the wastewaters discharged by industrial processes are prohibited by numerous regulations.

In Patent EP-0 659 686 B1 [SOLVAY S.A.], a method of purifying an aqueous alkali metal chloride solution comprising iodide ions is described, according to which the iodide ions are oxidized to iodine by means of active chlorine and the iodine is removed over a basic halogenated anion exchange resin, in which method the solution is electrolysed to generate therein the active chlorine *in situ*.

In this known method, the regeneration of the exchange resins is carried out by washing the resin using a solution of an alkali metal salt, for example of sodium sulphite. This regeneration requires the use of specific equipment and reagents that significantly increase the cost of the method.

The invention aims to provide a simplified method which is more economical than the known method described above.

The invention relates therefore to a method of purifying an aqueous solution comprising iodide, calcium and/or magnesium ions, according to which in a first step the solution is alkalized in order to precipitate calcium and/or magnesium, which are separated out, in a second step the aqueous solution from the first step is oxidized in order to oxidize the iodide ions to iodine and in a third step the iodine is removed by bringing the oxidized solution into contact with a basic halogenated anion exchange resin, the exchange resin being regenerated by using a portion of the aqueous solution from the first step.

In the method according to invention, the iodide ions may be in various forms. In the case of an aqueous alkali metal chloride solution, they are generally in the form of metal iodides, especially alkali metal iodides. They are naturally present in seawater or rock salt, when the aqueous solution is an aqueous sodium chloride solution.

Oxidation of the solution has the purpose of oxidizing the iodide ions to molecular iodine. The oxidation may be carried out by any suitable technique. Advantageously, it is achieved by reaction with an oxidant. The oxidant may be ozone. However it is recommended that it be active chlorine. The active chlorine may come from various sources, such as an external source of gaseous chlorine or an *in situ* electrolysis as described in EP 0 659 686.

However, in a preferred embodiment of the method, the oxidation of the solution comprises introducing a precise quantity of alkali metal hypochlorite into the solution.

It is recommended to avoid excessive oxidation of the iodide ions, which would lead to the formation of iodate anions IO₃⁻. This condition is imposed due to the fact that iodate anions generally are not adsorbed onto the resin used in the method.

To this end, according to an advantageous variant of this embodiment, the quantity introduced is controlled so as to produce, in the solution, a potential slightly greater than the redox potential of the oxidation reaction of the iodide ions by active chlorine to give molecular iodine:

I⁻+Cl^{°}→I^{°}+Cl⁻

Advantageously, a potential of 500 to 1000 mV, preferably 600 to 850 mV, is selected. In this variant of the invention, the risk of excessive formation of iodate anions in the solution is reduced to a negligible value.

At the end of the electrolysis, the aqueous solution is brought into contact with the anion exchange resin, so that the iodine is adsorbed onto the resin. The anion exchange resin is a basic resin comprising fixed cationic sites and interchangeable anionic sites, occupied by halogen anions, such as Br⁻, Cl⁻ and I⁻. Anion exchange resins that can be used in the method according to the invention are those in which the fixed cationic sites are quaternary ammonium groups attached to long-chain polymers such as styrene/divinylbenzene copolymers. Resins of this type are described in Patent US-A-2 900 352. Resins that are particularly suitable are the LEWATIT ^{®} resins (Lanxess) and the AMBERLITE ^{®} resins (Röhm & Haas Co). The resin is generally in the form of granules, in contact with which the solution is circulated. The resin used in the method according to the invention must have its interchangeable sites adapted to the solution to be treated. In the case of an alkali metal chloride solution, they are occupied by halogen anions. Chloride and iodide anions are preferred. The adsorption of free iodine from the solution onto the resin then takes place with formation of polyhalogenated complexes, probably according to the following reaction process:

I₂+Cl⁻→(I₂Cl)⁻

R⁺X⁻+(I₂Cl)⁻→R⁺(I₂Cl)⁻+X⁻

where:
I₂ represents the molecular iodine from the aqueous solution;
R⁺ represents a fixed cationic site of the resin;
X- represents a halide ion occupying an interchangeable anionic site of the resin (for example an I⁻ or Cl⁻ ion).

The resin is advantageously of macroporous type. This term is understood to mean resins possessing a permanent porous structure, the pore size being preferably between 10 and 100 nm, preferably between 20 and 50 nm. Such resins may be obtained by polymerization in the presence of a non-polymerizable solvent that, after evaporation, reveals the pores. An example of such resins is the LEWATIT ^{®} S 6328 resin manufactured by Lanxess.

It is recommended that the pH of the solution treated by the resins be less than 5, advantageously less than 3. It is preferred that this pH varies from 1.5 to 2. It has in fact been observed that such pH values improve the performance of the exchange resins, probably because they favour the stability of (I₂Cl)⁻ complexes. Moreover, in the embodiment of the method in which a precise quantity of alkali metal hypochlorite is introduced into the solution, such pH values make it possible to prevent excessive liberation of chlorine by the hypochlorite, which further reduces the risk of forming iodate ions. The pH control may be obtained very simply by addition of acid, preferably just upstream of the oxidation step.

The resin must be regenerated periodically, when its sites are saturated with the (I₂Cl)⁻ anions. According to the invention, the regeneration is obtained by washing the resin with a portion of the aqueous solution, taken from the stream from the first step of the method, under controlled conditions in order to decompose the (I₂Cl)⁻ ion complex while liberating molecular iodine. The iodine liberated may be recovered from the washing solution in a manner known *per se*.

In the method according to the invention, the pH of the regenerating solution constitutes an important parameter for the efficiency of this solution. To that effect, in a particular embodiment of the method according to the invention, the regeneration is carried out at an alkaline pH, preferably above 8.

The reaction on which the regeneration is based is:

3I₂+6OH⁻→IO₃⁻+5l⁻+3H₂O

Since, according to the invention, the resin is regenerated using a portion of the solution purified of calcium and magnesium by alkalization, in general no pH correction will, be necessary however.

In fact, the calcium and magnesium purification advantageously comprises treatment of the solution with sodium carbonate and sodium hydroxide, as is well known in the art (J. S. SCONCE - Chlorine, Its Manufacture, Properties and Uses - Reinhold Publishing Corporation - 1962 - pages 135 and 136). After such a calcium and magnesium purification, the solution is at an alkaline pH close to 10, which makes it very well suited for regenerating the ion exchange resins, in particular the macroporous resins and in particular when the solution treated is a solution of an alkali metal chloride, such as sodium chloride. If necessary, an additional alkalization may be prescribed.

The method likewise advantageously comprises a treatment step of purifying the solution of ammoniacal compounds and of bromine compounds, using the techniques explained in document EP-A-0 399 588.

The invention provides an integrated method making it possible to continuously purify, in a simple manner, numerous aqueous solutions contaminated with iodide ions and with calcium and/or magnesium. It may be applied, for example, to waters discharged by industrial processes.

The invention finds a particularly advantageous application in the purification of aqueous sodium chloride solutions intended for the manufacture of sodium carbonate by the Solvay process, and also for the manufacture of sodium hydroxide by electrolysis or electrodialysis.

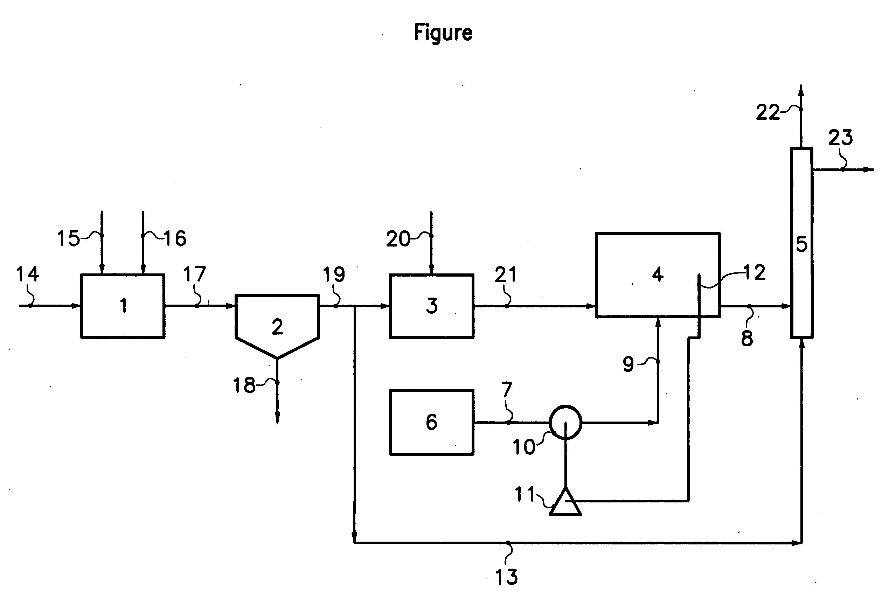

The features and details of the invention will emerge from the following description of the single figure of the appended drawing, which represents the diagram of a particular embodiment of the plant according to the invention.

The plant depicted diagrammatically in the figure is intended for purifying an aqueous sodium chloride solution contaminated by calcium and magnesium compounds (CaCl₂, MgCl₂) and by metal iodides (sodium, calcium and magnesium iodides).

It comprises successively a reaction chamber 1, intended for purifying the solution of calcium and of magnesium, a settling chamber 2, an acidification chamber 3, a reaction chamber 4 intended for oxidizing the iodide ions of the solution to iodine and a column 5 filled with beads of a macroporous anion exchange resin, whose interchangeable sites are saturated with halogen anions. A tank 6 containing sodium hypochlorite is connected via pipes 7 and 9 and a metering pump 10 to the reaction chamber 4. A potentiostat 11, whose purpose will be explained later on, is connected to the pump 10 and to an auxiliary electrode 12 situated in the reactor 4.

During operation of the plant depicted diagrammatically in the figure, the aqueous sodium chloride solution to be purified, denoted by reference numeral 14, is first purified of its calcium and magnesium ions. To that end, it is treated in reaction chamber 1 with sodium carbonate 15 and sodium hydroxide 16, so as to precipitate the calcium and magnesium in the form of calcium carbonate and magnesium hydroxide. Thus an aqueous suspension 17 is recovered from the reaction chamber 1, which is transferred into the settling chamber 2. Recovered from the settling chamber 2 is, on one hand, a precipitate of calcium carbonate and magnesium hydroxide 18 that is separated off and, on the other hand, an aqueous sodium chloride solution 19 that is introduced into the acidification chamber 3. In this chamber, a sufficient quantity of hydrochloric acid 20 is added to the aqueous solution 19 in order to bring the pH of the solution to a value around 1.5 to 2. The acidic sodium chloride solution 21 that is recovered from chamber 3 is optionally preheated in a heater (not shown), then introduced into chamber 4. The aqueous solution then passes into the resin column 5, via the junction pipe 8. The quantity of active chlorine in the form of sodium hypochlorite introduced into the cell 4 is controlled by the flow rate of the pump 10, so as to oxidize of the iodide ions to molecular iodine, without significant formation of iodate anions. To that end, the pump 10 is controlled by the potentiostat 11 and the auxiliary electrode 12, so that the electrochemical potential of the aqueous solution in chamber 4 stabilizes at a set value. The aqueous solution entering into the resin column 5 thus comprises molecular iodine. In the column 5, the solution percolates through the resin and the iodine that it comprises is gradually absorbed onto the resin. Recovered at the outlet of column 5 is an aqueous sodium chloride solution 23, purified of calcium, magnesium and iodine. According to the invention, the column is regenerated using a stream of an alkaline sodium chloride solution (13), removed from the outlet of the settling chamber (2). It may optionally be subjected to a subsequent treatment to purify it of ammoniacal compounds and bromine compounds, using the techniques explained in document EP-A-0 399 588.

The example whose description follows serves to illustrate the invention.

In this example, a flow of 2 m³/h of aqueous solution more or less saturated in sodium chloride (about 300 g of sodium chloride per litre of solution) comprising 5.5 mg/l of calcium, 2.7 mg/l of magnesium and 0.3-0.4 mg/l of iodide ions was subjected to a method in accordance with the invention for purifying it of magnesium, calcium and iodide ions.

For the resin, a column of 220 litres of LEWATIT ^{®} S 6328 resin (Lanxess) was used.

For the calcium and magnesium purification, a stoichiometric amount of sodium carbonate and sodium hydroxide was added per litre of solution to be purified.

The aqueous solution to be purified, acidified in order to give it a pH value close to 1.7, was oxidized by addition of a stream of dilute sodium hypochlorite comprising 180 ppm of active chlorine. The flow rate of this stream was controlled so as to obtain a redox potential of 740 mV in the reaction chamber.

In the purified sodium chloride solution, recovered from the resin column, an iodine content equal to 0.01 mg/l was measured.

The column was regenerated using a stream of 1.5 m³/h removed from the stream of sodium chloride solution, alkalized up to a pH value of 11 by addition of sodium hydroxide. Following this regeneration, more than 80% of the iodine retained by the resin column was recovered.

## Claims

1. Method of purifying an aqueous solution (14) comprising iodide, calcium and/or magnesium ions, according to which in a first step the solution is alkalized in order to precipitate calcium and/or magnesium, which are separated out, in a second step the aqueous solution (19) from the first step is oxidized in order to oxidize the iodide ions to iodine and in a third step the iodine is removed by bringing the oxidized solution (8) into contact with a basic halogenated anion exchange resin (5), **characterised in that** the exchange resin regenerated by using a portion (13) of the aqueous solution from the first step.

2. Method according to the preceding claim, in which the aqueous solution is an alkali metal chloride solution.

3. Method according to Claim 1 or **2, characterized in that** before oxidizing the solution from the first step, it is acidified.

4. Method according to Claim 3, **characterized in that** the solution is acidified to a pH below 3.

5. Method according to Claim 4, **characterized in that** the solution is acidified to a pH of 1.5 to 2.

6. Method according to any one of the preceding claims, in which the aqueous solution is oxidized by means of active chlorine.

7. Method according to either one of Claims 5 and 6, **characterized in that** the oxidation is controlled so as to produce, in the solution, a potential greater than the redox potential of the oxidation reaction of the iodide ions by active chlorine to give molecular iodine.

8. Method according to Claim 7, **characterized in that** the oxidation is controlled by means of the flow of active chlorine introduced into the solution, so as to achieve therein a potential of 600 to 850 mV.

9. Method according to any one of Claims 1 to 8, **characterized in that** the ion exchange resin is macroporous.

10. Method according to any one of Claims 1 to 9, **characterized in that** it is applied to aqueous sodium chloride solutions.

## Patentansprüche

1. Verfahren zur Reinigung einer wäßrigen Lösung (14), die Iodid-, Calcium- und/oder Magnesiumionen enthält, gemäß dem man in einem ersten Schritt die Lösung alkalisiert, um Calcium und/oder Magnesium auszufällen, und diese Substanzen dann abtrennt, in einem zweiten Schritt die wäßrige Lösung (19) aus dem ersten Schritt oxidiert, um die Iodidionen zu Iod zu oxidieren, und in einem dritten Schritt das Iod durch Inberührungbringen der oxidierten Lösung (8) mit einem basischen halogenierten Anionenaustauscherharz (5) entfernt, **dadurch gekennzeichnet, daß** man das Austauscherharz durch Verwendung einer Portion (13) der wäßrigen Lösung aus dem ersten Schritt regeneriert.

2. Verfahren nach dem vorhergehenden Anspruch, bei dem es sich bei der wäßrigen Lösung um eine Alkalimetallchloridlösung handelt.

3. Verfahren nach Anspruch 1 oder 2, **dadurch gekennzeichnet, daß** man die Lösung aus dem ersten Schritt vor dem Oxidieren ansäuert.

4. Verfahren nach Anspruch 3, **dadurch gekennzeichnet, daß** man die Lösung bis zu einem pH-Wert unter 3 ansäuert.

5. Verfahren nach Anspruch 4, **dadurch gekennzeichnet, daß** man die Lösung bis zu einem pH-Wert von 1,5 bis 2 ansäuert.

6. Verfahren nach einem der vorhergehenden Ansprüche, bei dem man die wäßrige Lösung mit Hilfe von aktivem Chlor oxidiert.

7. Verfahren nach einem der Ansprüche 5 und 6, **dadurch gekennzeichnet, daß** man die Oxidation so steuert, daß in der Lösung ein Potential erzeugt wird, das größer als das Redoxpotential der Oxidationsreaktion der Iodidionen durch aktives Chlor zu molekularem Iod ist.

8. Verfahren nach Anspruch 7, **dadurch gekennzeichnet, daß** man die Oxidation mit Hilfe des in die Lösung eingetragenen Stroms von aktivem Chlor so steuert, daß man darin ein Potential von 600 bis 850 mV erhält.

9. Verfahren nach einem der Ansprüche 1 bis 8, **dadurch gekennzeichnet, daß** das Ionenaustauscherharz makroporös ist.

10. Verfahren nach einem der Ansprüche 1 bis 9, **dadurch gekennzeichnet, daß** es auf wäßrige Natriumchloridlösungen angewandt wird.

## Revendications

1. Procédé d'épuration d'une solution aqueuse (14) contenant des ions iodure, de calcium et/ou de magnésium, selon lequel dans une première étape on alcalinise la solution afin de précipiter du calcium et du magnésium, que l'on sépare, dans une seconde étape on oxyde la solution aqueuse (19) issue de la première étape afin d'oxyder les ions iodure en iode et dans une troisième étape on élimine l'iode par mise en contact de la solution oxydée (8) avec une résine échangeuse d'anions (5), basique, halogénée, **caractérisé en ce que**, la résine échangeuse est régénérée au moyen d'une partie (13) de la solution aqueuse issue de la première étape.

2. Procédé selon la revendication précédente, dans lequel la solution aqueuse est une solution de chlorure de métal alcalin

3. Procédé selon la revendication 1 ou 2, **caractérisé en ce qu'**avant d'oxyder la solution issue de la première étape, on l'acidifie.

4. Procédé selon la revendication 3, **caractérisé en ce qu'**on acidifie la solution à un pH inférieur à 3.

5. Procédé selon la revendication 4, **caractérisé en ce qu'**on acidifie la solution à un pH de 1,5 à 2.

6. Procédé selon l'une quelconque des revendications précédentes, dans lequel on oxyde la solution aqueuse au moyen de chlore actif.

7. Procédé selon l'une quelconque des revendications 5 ou 6, **caractérisé en ce qu'**on règle l'oxydation de manière à réaliser dans la solution un potentiel supérieur au potentiel d'oxydo-réduction de la réaction d'oxydation des ions iodure en iode moléculaire par le chlore actif.

8. Procédé selon la revendication 7, **caractérisé en ce qu'**on règle l'oxydation au moyen du débit de chlore actif introduit dans la solution, de manière à y réaliser un potentiel de 600 à 850 mV.

9. Procédé selon l'une quelconque des revendications 1 à 8, **caractérisé en ce que** la résine échangeuse d'ions est macroporeuse.

10. Procédé selon l'une quelconque des revendications 1 à 9, **caractérisé en ce qu'**il est appliqué aux solutions aqueuses de chlorure de sodium.
